# EUROPÄISCHE PATENTSCHRIFT

(11) **EP 0 612 918 B1**
(45) Veröffentlichungstag und Bekanntmachung des Hinweises auf die Patenterteilung: **30.07.1997**
(21) Anmeldenummer: 94101967.1
(22) Anmeldetag: 09.02.1994
(51) Int. Cl.: F02K 9/68

(54) **Triebwerk**
Thruster
Moteur à reaction

(30) Priorität: 23.02.1993 DE 4305480
(43) Veröffentlichungstag der Anmeldung: 31.08.1994
(73) Patentinhaber: Daimler-Benz Aerospace Aktiengesellschaft, 80995 München (DE)
(72) Erfinder: Steenborg, Manfred, D-27721 Ritterhude-Ihlpohl (DE)
(74) Vertreter: Hansmann, Dierk, Dipl.-Ing.

(56) Entgegenhaltungen:
- EP-A- 0 134 108
- US-A- 3 310 938
- US-A- 3 820 956
- US-A- 3 838 977
- US-A- 4 069 664
- US-A- 4 352 782

## Beschreibung

Die Erfindung betrifft ein Schubtriebwerk auf der Basis der katalytischen und/oder thermischen Zersetzung eines flüssigen Energieträgers, insbesondere Hydrazin, bei dem der flüssige Energieträger aus einem Vorratsbehälter über wenigstens ein Einspritzrohr sowie einen Einspritzkopf in eine mit einem Katalysatorbett gefüllte Zersetzungskammer gefördert wird und bei dem zwischen den Einspritzkopf und dem Katalysatorbett wenigstens ein vollflächig am Katalysatorbett anliegendes und in Richtung auf dieses druckbeaufaufschlagter Sieb angeordnet ist.

Schubtriebwerke dieser Art, bei denen in der Regel Hydrazin als flüssiger Energieträger verwendet wird, werden für verschiedene Anwendungsfälle in der Raumfahrttechnik eingesetzt und, entsprechend den unterschiedlichen Aufgaben, für einen weiten Bereich von Schubklassen hergestellt. Dabei finden sowohl Triebwerke Verwendung, bei denen das Hydrazin nur über eine einzige, im Einspritzkopf zentral angeordnete Einspritzbohrung auf das in der Zersetzungskammer befindliche Katalysatorbett gelangt, als auch Triebwerke mit sogenannten Shower Heads, bei denen das Hydrazin über eine Vielzahl von Bohrungen in die Zersetzungskammer gesprüht wird. Als Katalysatorbett dient in beiden Fällen eine häufig aus einzelnen Körnern bestehende Füllung eines katalytisch wirkenden Werkstoffs, beispielsweise mit Iridium dotierte oder beschichtete Aluminiumoxid-Keramik (Al₂O₃).

Daneben sind aus der EP-A- 0 134 108 ein Gasgenerator sowie eine Turbine für den Notfallantrieb in Flugzeugen, eine sogenannte Emergency Power Unit, bekannt geworden, wobei der Gasgenerator den eingangs angegebenen Aufbau aufweist.

Ein Problem, das bei derartigen Triebwerken auftreten kann, ist ein frühzeitiger Schubverlust bzw. sind Störungen infolge einer Beschädigung des Katalysatorbetts. Solche Beschädigungen werden beispielsweise durch die starke punktförmige Erosionsbeanspruchung des Katalysatorbetts durch den auftreffenden Hydrazinstrahl verursacht, der aus dem Einspritzkopf mit Geschwindigkeiten zwischen 2 und 20 m/s austritt. Diese Strahlbeaufschlagung kann zu einer Zerstörung einzelner Körner des Katalysatorbetts führen, als deren Folge sich Poren bzw. Hohlräume im Katalysatorbett bilden, aus denen Unregelmäßigkeiten bei der katalytischen Zersetzung des Hydrazins resultieren können.

Poren und Hohlräume können aber auch bereits von Beginn an fertigungsbedingt in einem solchen Katalysatorbett vorhanden sein oder sich durch den gegenseitigen Abrieb der einzelnen Körner infolge von Bewegungen relativ zueinander bilden. Dieser Trend wird gefördert durch Vibrationslasten, die auf den Katalysator einwirken. In all diesen Fällen wird die Laufruhe eines solchen Triebwerks durch Druckspitzen nachhaltig beeinträchtigt, und es kann zu einer vorzeitigen Zerstörung des Katalysatorbetts kommen.

Um den Alterungserscheinungen von Hydrazintriebwerken entgegenzuwirken, wurde in der Literaturstelle Bericht AIAA 91-2041 Long Life Monopropellant, Seite 3 bis 5, der Einbau von Federelementen vorgeschlagen, die auf das Katalysatorbett eine Druckspannung ausüben und die eine gegenseitige Bewegung der einzelnen Körner des Katalysatorbetts und damit verbundene Abrieberscheinungen verhindern sollen. Diese Vorspannelemente werden bei dem bekannten Triebwerk im Bereich der Austrittsdüse für die heißen Reaktionsgase in die Zersetzungskammer eingebaut, um eine anfänglich raschere ther mische Ausdehnung des Katalysatorbetts gegenüber der verzögert einsetzenden thermischen Ausdehnung der umgebenden Wandungen der Zersetzungskammer zu unterdrücken. Ein an diesem Einbauort befindliches Vorspann- oder Federelement ist dabei sehr hohen thermischen Beanspruchungen unterworfen, da in diesem Bereich des Triebwerks, nahe der Austrittsdüse, Temperaturen von bis zu 1.100°C herrschen können. Die verwendeten Federelemente müssen deshalb aus einem hochwarmfesten Werkstoff, beispielsweise Molybdän, bestehen.

Demgegenüber ist bei der Anordnung gemäß der EP-A-0 134 108 vorgesehen, das Katalysatorbett einspritzseitig durch eine in der Zersetzungskammer bewegliche Wand zu begrenzen und durch justierbare Fixierbittel eine mögliche Expansionsbewegung dieser Wand zu verhindern bzw. durch eine federnde Halterung dieser Wand Vibrationsbelastungen vom Katalysatorenbett fernzuhalten.

Aufgabe der Erfindung ist, es ein Triebwerk der eingangs genannten Art so auszubilden, daß seine Standzeit weiter verbessert wird und es eine während seiner gesamten Lebensdauer möglichst gleichbleibende Schubcharakteristik aufweist.

Diese Aufgabe wird gleichermaßen durch ein Triebwerk mit den kennzeichnenden Merkmalen des Patentanspruchs 1 gelöst. Eine vorteilhafte Weiterbildung des erfindungsgemäßen Triebwerks ist in dem Anspruch 2 angegeben.

Das erfindungsgemäße Triebwerk weist den Vorteil auf, daß einerseits die Druckbeaufschlagung des Katalysatorbetts und damit seine Kompression in demjenigen Teil der Zersetzungskammer erfolgt, in dem sich das Auftreten von Poren und Hohlräumen besonders nachteilig auf das Betriebsverhalten des Triebwerks auswirkt, nämlich im Bereich der ersten Katalysatorkornlagen und daß andererseits dieser Effekt auf eine konstruktiv sehr einfache Weise erreicht wird.

Bei der ersten Ausführungsform des erfindungsgemäßen Triebwerks wird überdies die für eine Druckbeaufschlagung des Katalysatorbetts erforderliche Nachführung bzw. Anpressung des Einspritzkopfes an das Katalysatorbett auf hydraulischem Wege herbeigeführt, indem dieser über einen Wellenbalg an das Einspritzrohr gekoppelt ist. Der gleichbleibende hydrostatische Druck des flüssigen Hydrazins bewirkt dabei einen über den gesamten zur Verfügung stehenden Balgstreckungsweg des Einspritzkopfes gleichbleibenden Anpreßdruck ohne das für Federelemente typische Nachlassen der Kraftwirkung bei größeren Wegen, so daß mit diesem Triebwerk auch extrem lange Betriebsfeuerzeiten realisiert werden können, weil das Katalysatorbett seine kompakte Form behält.

Nachfolgend soll die Erfindung anhand von in der Zeichnung dargstellten Ausführungsbeispielen näher erläutert werden. Es zeigen:
- Fig. 1: eine teilweise geschnittene Darstellung eines Hydrazintriebwerks im Einbauzustand zu Beginn einer Mission, und
- Fig. 2: das Triebwerk gemäß Fig. 1 nach einer längeren Einsatzdauer.

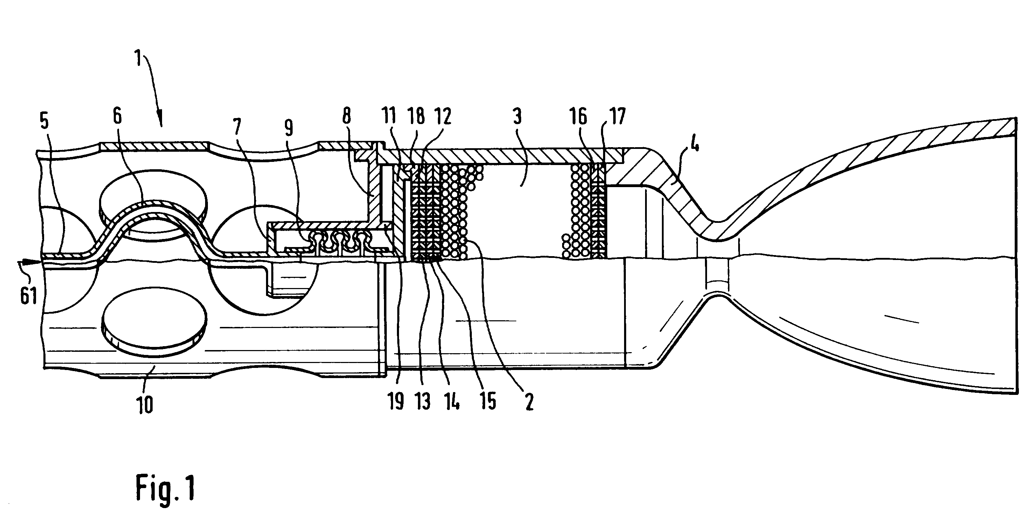

Das in Fig. 1 dargestellte Hydrazintriebwerk umfaßt einen Einspritzbereich 1 für den flüssigen Energieträger 61, eine mit einem Katalysatorbett 2 gefüllte Zersetzungskammer 3 sowie eine Austrittsdüse 4. Der Einspritzbereich 1 besteht dabei aus einem Einspritzrohr 5 mit einem Dehnungsbogen 6, das über ein Verbindungsstück 7 mit einer Kopfplatte 8 verschweißt ist, die die Zersetzungskammer 3 abschließt. Das kammerseitige Ende des Einspritzrohres 5 mündet in einen Wellenbalg 9, mit dem es ebenfalls verschweißt ist. Das Einspritzrohr 5 sowie die Kopfplatte 8 sind von einem Hitzeschild 10 umgeben.

Das zweite Ende des Wellenbalges 9 ist mit einem Einspritzkopf 11 verschweißt, der im Fall des hier dargestellten Ausführungsbeispiels als Platte ausgebildet ist, die den gesamten Querschnitt der Zersetzungskammer 3 ausfüllt und mit einer zweiten Platte 18 verschweißt ist, die, nach Art sogenannter Shower Heads, mit einer Vielzahl von Austrittsbohrungen 12 für das in die Zersetzungskammer 3 eingespritzte Hydrazin 61 versehen ist.

Unmittelbar vor den Austrittsbohrungen 12 sind in der Zersetzungskammer 3 mehrere, im vorliegenden Fall drei, Lagen eines Drahtgewebes angeordnet. Diese Siebe 13 bis 15, die mit der Platte 18 verbunden sind, schützen das granulatförmige Katalysatorbett 2 vor der direkten Beaufschlagung durch das eingespritzte Hydrazin 61. Das Katalysatorbett besteht im Fall des hier beschriebenen Ausführungsbeispiels aus mit Iridium beschichteten Körnern einer Aluminiumoxid-Keramik (Al₂O₃), wobei die mittlere Korngröße etwa 20 bis 30 mesh beträgt, was einem mittleren Teilchendurchmesser von ca. 0.6 bis 0.9 mm entspricht. Zur Austrittsdüse 4 hin wird das Katalysatorbett 2 durch zwei weitere Siebe 16 und 17 in seiner Position fixiert.

Während diese letztgenannten Siebe 16 und 17 fest mit der Austrittsdüse 4 verbunden, in diesem Fall verschweißt sind, sind sowohl die Siebe 13 bis 15 als auch der Einspritzkopf 11 in der Zersetzungskammer 3 verschieblich gehaltert. Dabei liegen die Siebe 13 bis 15 jeweils über ihren gesamten Umfangsbereich dicht schließend an der Innenwand der Zersetzungskammer 3 an.

Bei dem in Fig. 1 dargestellten Ausgangszustand zu Beginn einer Mission liegt die der Zersetzungskammer 3 abgewandte rückwärtige Fläche des Einspritzkopfes 11 an einer umlaufenden Rezeßkante 19 der Kopfplatte 8 an, die sich in die Zersetzungskammer 3 erstreckt. Da die Zersetzungskammer 3 im Bereich zwischen den Sieben 15 und 16 in dichtest möglicher Packung mit dem das Katalysatorbett 2 bildenden Granulat gefüllt ist, befindet sich der Einspritzkopf 11 in einer stabilen Einbauposition, in der er vor den Einflüssen der Vibrationen geschützt ist. Dies gilt auch für die Phase der Inbetriebnahme des Triebwerks, in der der Wellenbalg 9 noch nicht mit dem flüssigen Hydrazin 61 beaufschlagt ist.

Zur Inbetriebnahme des Triebwerks wird ein in der Zeichnung nicht dargestelltes Ventil geöffnet, das das Einspritzrohr 5 mit einem in der Zeichnung ebenfalls nicht dargestellten Vorratsbehälter für den flüssigen Energieträger verbindet. Das Hydrazin 61 gelangt dann über das Einspritzrohr 5 und den Wellenbalg 9 in den Einspritzkopf 11, aus dessen Bohrungen 12 es durch die Siebe 13 bis 15 hindurch in die Zersetzungskammer 3 austritt. Hier setzt die katalytische exotherme Zersetzung des Hydrazins ein; die dabei entstehenden heißen Reaktionsgase, im wesentlichen Stickstoff-, Ammoniak- und Wasserstoffgas, verlassen die Zersetzungskammer 3 über die Austrittsdüse 4.

Entsteht während der Brenndauer des Triebwerks als Folge der Beschädigung oder Zerstörung einzelner Körner des Katalysatorbetts ein Hohlraum, der zu einer Lockerung des Katalysatorbetts führt, so wird infolge des hydrostatischen Drucks des flüssigen Hydrazins 61, der den Wellenbalg 9 zu expandieren sucht, das aus dem Einspritzkopf 11 und den Sieben 13 bis 15 bestehende Paket so weit in die Zersetzungskammer 3 hinein gepreßt, bis der Widerstand des auf diese Weise neu kompaktierten Katalysatorbetts 2 diese Druckbeaufschlagung kompensiert.

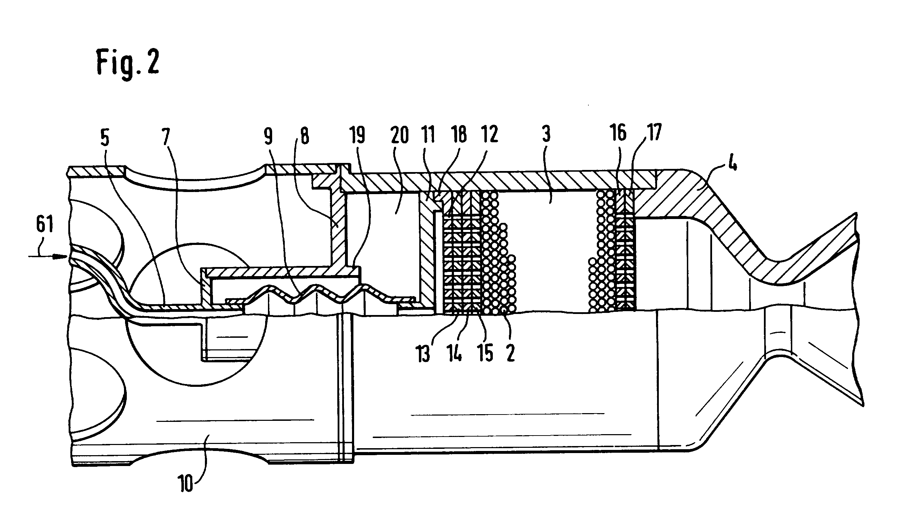

Nach einer mehrfachen Wiederholung dieses Vorgangs stellt sich ein Zustand ein, wie er in Fig. 2 dargestellt ist: Hier ist der Wellenbalg 9 weitgehend entspannt, und zwischen dem Einspritzkopf 11 und der Kopfplatte 8 ist ein Hohlraum 20 entstanden. Der Bereich der Zersetzungskammer 3, der mit dem Katalysatorbett 2 gefüllt ist, ist entsprechend verkürzt worden.

Der Wellenbalg 9 besteht aus einem weichgeglühten metallischen Werkstoff, so daß sichergestellt ist, daß auch bei einem zeitweiligen Schließen des Zuführventils für das flüssige Hydrazin, wie im Pulsbetrieb üblich, und dem damit verbundenen Fortfall des hydrostatischen Drucks der Wellenbalg 9 seine angenommene gelängte Form beibehält, also nicht zurückfedert.

Bei Triebwerken mit nur wenigen oder einer einzigen Einspritzbohrung, sogenannten Single Tube Einspritzungen, ist dagegen die Verwendung eines Wellenbalges als krafterzeugendes Vorspannelement nicht vorteilhaft. Für derartige Triebwerke, die vorwiegend im Bereich geringer Schübe unterhalb etwa 1 N eingesetzt werden, ist stattdessen eine Anordnung geeignet, wie sie in der nachfolgend erläuterten Figur 3 dargestellt ist. Bei diesem Triebwerk wird die für den angestrebten Kompressionseffekt erforderliche Vorspannung durch ein mechanisches Federelement bereitgestellt, ist also ständig vorhanden.

## Patentansprüche

1. Schubtriebwerk auf der Basis der katalytischen und/oder thermischen Zersetzung eines flüssigen Energieträgers, insbesondere Hydrazin, bei dem der flüssige Energieträger aus einem Vorratsbehälter über wenigstens ein Einspritzrohr (5,25) sowie einen Einspritzkopf (11,31) in eine mit einem Katalysatorbett (2,22) gefüllte Zersetzungskammer (3,23) gefördert wird und bei dem zwischen den Einspritzkopf (11,31) und dem Katalysatorbett (2,22) wenigstens ein vollflächig am Katalysatorbett (2,22) anliegendes und in Richtung auf dieses druckbeaufaufschlagtes Sieb (13-15,33-35) angeordnet ist, dadurch gekennzeichnet, daß das Sieb (13-15) sowie der Einspritzkopf (11) in Richtung auf das Katalysatorbett (2) beweglich gehaltert sind und daß zwischen dem Einspritzrohr (5) und dem Einspritzkopf (11) ein vom flüssigen Energieträger durchströmbarer Wellenbalg (9) angeordnet ist.

2. Schubtriebwerk nach Anspruch 1, dadurch gekennzeichnet, daß der Einspritzkopf (11) die Querschnittsfläche der Zersetzungskammer (3) ausfüllt.

## Claims

1. Thruster based on the catalytic and/or thermal decomposition of a liquid energy carrier, in particular hydrazine, wherein the liquid energy carrier is delivered from a storage tank via at least one injection pipe (5, 25) and an injection head (11, 31) into a decomposition chamber (3, 23) filled with a catalyst bed (2, 22) and wherein disposed between the injection head (11, 31) and the catalyst bed (2, 22) is at least one screen (13-15, 33-35), which is applied by its full surface against the catalyst bed (2, 22) and is pressure-loaded in the direction of said catalyst bed, characterized in that the screen (13-15) as well as the injection head (11) are mounted so as to be movable in the direction of the catalyst bed (2) and that disposed between the injection pipe (5) and the injection head (11) is an undulating diaphragm (9), through which the liquid energy carrier may flow.

2. Thruster according to claim 1, characterized in that the injection head (11) completely fills the cross-sectional area of the decomposition chamber (3).

## Revendications

1. Groupe motopropulseur basé sur la décomposition catalytique et/ou thermique d'un porteur d'énergie liquide, plus particulièrement de l'hydrazine, dans lequel le porteur d'énergie liquide est transporté à partir d'un réservoir par l'intermédiaire d'au moins une canalisation d'injection (5, 25) de même qu'une tête d'injection (11, 31) dans une chambre de décomposition (3, 23) remplie par un lit du catalyseur (2, 22), et dans lequel entre la tête d'injection (11, 31) et le lit du catalyseur (2, 22) est disposé au moins un tamis (13-15, 33-35) reposant sur toute sa surface sur le lit du catalyseur (2, 22) et pressé contre celui-ci, **caractérisé en ce que** le tamis (13-15) de même que la tête d'injection (11) sont montés de manière à pouvoir coulisser en direction du lit du catalyseur (2) et en ce que entre la canalisation d'injection (5) et la tête d'injection (11) est disposée une connexion en accordéon (9) pouvant être traversée par un porteur d'énergie liquide.

2. Groupe motopropulseur selon la revendication 1, caractérisé en ce que la tête d'injection (11) remplit la surface de la section transversale de la chambre de décomposition (3).
